(19) Europäisches Patentamt
European Patent Office
Office européen des brevets

(11) EP 1 793 633 A1

(12) EUROPEAN PATENT APPLICATION

(43) Date of publication:
06.06.2007 Bulletin 2007/23

(51) Int Cl.:
H04Q 7/38 (2006.01)

(21) Application number: 05425851.2

(22) Date of filing: 30.11.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: Siemens S.p.A.
20126 Milano (IT)

(72) Inventors:
• Baudone, Tommaso
  19038 Sarzana (IT)

• Coletti, Luca
  32044 Piave di Cadore (BL) (IT)
• Moretti, Lino
  20128 Milano (IT)
• Riato, Nicola
  20040 Caponago (MI) (IT)
• Primolevo, Giuseppe
  20135 Milano (IT)
• Spagnolini, Umberto
  20046 Biassono (MI) (IT)

(54) **Method for selecting users and corresponding data rates to be spatially multiplexed in an SDMA system**

(57) A method for selecting spatially separable users and corresponding data rates in an SDMA wireless communication system aims at maximising the sum of the rates of users (2-1...2-K) that can be spatially multiplexed, weighted by a user priority, while meeting overall power constraints. Starting from a null data rate and a null power level allotted to all users (2-1...2-K) that are candidate for selection, the method calculates for each user a cost function for passing the user to a next higher rate and considers for spatial separation users with a minimum cost function. The method is implemented at a base station (1) of the system by processing means interfacing the physical and the MAC layers.

**FIG 4**

BEGIN — 40

FOR EACH ACTIVE USER: APPLY BEAMFORMING VECTOR; SET POWER AND BIT RATE = 0 — 41

PROMOTABLE USER SET = ACTIVE USER SET — 42

43 — CALCULATE COST FUNCTION $C_i$ FOR EACH PROMOTABLE USER

REPEAT ON ALL PROMOTABLE USERS

$\min(C_i) < \infty$ ? — 44
YES / NO
A

PROMOTE USER WITH $\min(C_i)$ TO NEXT HIGHER BIT RATE — 45

UPDATE BEAM FORMERS BASED ON NEW POWER LEVEL PER USER — 46

UPDATE MULTI-USER SOLUTION — 47

PROMOTABLE USER SET EMPTY? — 48
NO / YES
A

EP 1 793 633 A1

**Description**

Field of the invention

The present invention relates to wireless communication systems employing Space Division Multiple Access (SDMA) techniques, and more particularly it concerns a method of and an apparatus for selecting and scheduling spatially separable users and the corresponding data rates in one such system.

Background of the invention

Space Division Multiple Access (SDMA) is widely recognised as one of the most promising techniques for improving capacity of communications systems like those mentioned above, by exploiting users spatial separation in addition to time and/or frequency and/or code separation. This access technique allows different users to be served on the same channel at the same time, thus providing significant improvements in the spectral efficiency. SDMA can be realised by using antenna arrays at the base station and by exploiting the possibility to manage intra-cell interference by appropriate signal processing techniques such as beamforming (or digital precoding)..

SDMA advantages are related with those of more .general communication systems that employ multiple antennas at both ends of the link, such as the Multiple Input Multiple Output (MIMO) systems. MIMO communication techniques make use of multi-element antenna arrays at both the transmitter (TX) and the receiver (RX) side of a radio link and they have been theoretically shown to improve the capacity over more traditional Single Input Multiple Output (SIMO) systems without any need of additional bandwidth.

Information theory models showed that the advantages in terms of capacity obtainable with a MIMO system are related with the number of antenna elements used at the TX side (nT) and the RX side (nR). In particular it has been demonstrated that the single user capacity can ideally grow linearly and asymptotically with min(nT, nR). MIMO advantages come from the exploitation of multiple paths (multipaths) that characterise propagation between TX and RX. In highly scattered environments, multiple paths can be exploited as separated channels that can be detected simultaneously at the receiver through an appropriate processing. By doing this, advantages can be obtained in terms of diversity gain through space-time codes, or alternatively in terms of capacity gain as spatial multiplexing.

MIMO advantages can be extended to a multi-user scenario where a transmitter equipped with multiple antennas communicates with several receivers each equipped with a single antenna, in a so called multi-user Multiple Input Single Output (MISO) scenario. In particular, by exploiting the propagation conditions specific for the users and thanks to an appropriate precoding of downlink signals (beamforming), it is possible to separate the users in the spatial domain, thus realising the SDMA.

In cellular communication systems, the multi-user MISO scenario results to be attractive because it allows keeping cost and complexity of the user terminals limited, while advanced antenna systems and complexity increase introduced by signal precoding need to be brought only to the base station.

As said above, SDMA provides an additional dimension to the available resources that can be assigned to the users of a cellular system, namely spatial dimension. However, spatial separation is less effective than time and/or frequency and/or code separation. Actually, interference among users that share the same time/frequency/code resources can severely degrade performance of an SDMA system. A fundamental issue when designing SDMA systems is then the choice of users that can be served simultaneously according to the channel and interference conditions. This task is usually named as scheduling at the physical (PHY) layer.

In general, scheduling consists in distributing limited available resources among active users. In the SDMA case, the available resources are the link bandwidth and the instantaneous output power that has to be shared between users to be simultaneously served. In case of spatial multiplexing, the power allocation severely affects performance at both the user and the base station (cell) side. In particular, mutual interference depends on which and how many users are actually simultaneously served, while the power allocation influences the throughput and then the performance at the cell and user levels.

In order to practically manage the complexity of the problem, scheduling at the physical layer is conceptually divided into two steps: transmit beamforming and power allocation.

Beamforming provides for obtaining spatial separation of co-channel users by managing interference levels that will be perceived by active users: i.e., the beam patterns of the users are adapted at the base station so as to keep an acceptable Signal to Interference and Noise Ratio (SINR) at each receiver. In particular, the simplest example of user separation in a SDMA approach is the traditional sectorisation, where a certain coverage area is physically split into a number of sectors and users in each sector are separated in time and/or frequency. More advanced techniques, which exploit the knowledge at the transmitter of the channel state information (CSI), separate users based on the so-called spatial signatures of the downlink channel matrix subspace by evaluating the users' mutual correlation. Similar techniques can be also employed without CSI, leading to the so-called opportunistic beamforming approaches. Alternatively, separation can be operated on the base of users' mean Direction of Arrival (DoA) or by exploiting spatial precoding at the transmitter.

In any case, CSI knowledge and use of signal precoding or beamforming techniques at the transmitter are most promising, because they allow the base station to foresee the interference level among beams directed to different users before actual transmission.

Once the spatial characteristics of users have been determined, the base station has to distribute the available power among active users. Power allocation is strictly related to the signal mapping that defines the performance of served users and of the cell. Users affected by the worse channel conditions can degrade the performance of users experiencing good channels as they require excessively high power levels to support higher-rate modulations and thus they inject more interference into the system (dirty-users problem). An appropriate trade-off between single user needs and cell performance has therefore to be undertaken just from the PHY scheduling level. Furthermore, this task is deeply related with the distribution of link bandwidth resources between users, this being usually a matter of MAC (Medium Access Control) layer scheduler. In fact power assignment influences both the individual performance of users to be served and also the overall performance of the cell. In particular, power assignment issues entail dealing with concepts like fairness and Quality of Service (QoS) requirements that are typically related with DLC (Data Link Control) layer. This co-operation between DLC and PHY layers is part of a more general co-operation between ISO OSI layers called "cross layer interaction".

The cross layer interaction between DLC and PHY layers aims in particular at defining methods for selecting users to be simultaneously served by considering jointly all requirements and constraints coming from PHY, MAC and upper layers. In particular, the resource allocation problem involves the determination of the service rate, the spatial beamforming vectors and the required transmit power for each user to be served, while meeting requirements posed by the scheduler, such as fairness, user throughput or delay.

An overview of the solutions to the problem of selecting the users to be spatially multiplexed and allotting them the necessary resources in an SDMA system can be found in D. Bartolomé Calvo, "Fairness Analysis of Wireless Beamforming Schedulers", Ph. D. Dissertation, 10 November 2004. The document discloses that the existing iterative methods aim at minimising a cost of the allotment of the spatial resource are based on two general strategies: bit filling (the users for which a cost of rate increase is minimum are allotted higher rates) and bit removal (the users that impose the highest penalty on the system performance are allotted lower rates).

The invention adopts a bit filling strategy.

A method based on the bit filling strategy is disclosed in by F. Shad et al. in "Dynamic Slot Allocation (DSA) in Indoor SDMA/TDMA Using a Smart Antenna Basestation", IEEE/ACM Transactions on Networking, vol. 9, no. 1, pp 69-81, February 2001 (see in particular the paragraph "Best Fit SDMA/TDMA"). The method aims at determining the order of allocation of the users in each slot of a TDMA frame, by setting a limit to the SINR of the user stations in a same slot and by adopting a criterion of maximum minimum SINR for user selection.

The method is based on the implicit assumption that traffic is constant and that no power constraint exists, and so it is somewhat unrealistic. Moreover, since the algorithm is directed to building the frame, the solution found is constrained by the choices made at the physical level, whereas on the contrary a priority imposed by the internal rules of the DLC scheduler is not taken into account. Still further, no adaptive modulation/coding scheme is considered.

H. Yin and H. Liu, "Performance of Space-Division Multiple-Access (SDMA) with Scheduling", IEEE Transaction on Wireless Communications, vol. 1, no. 4, pp. 611-618, October 2002, modify the method of F. Shad et al. by considering for scheduling only users that have information to transmit and by introducing a priority for the users. The method disclosed in that document divides the scheduling into two steps: packet prioritising and packet allocation. The packet prioritising assigns each packet a priority by quantifying aspects related with the queue of origin. The packets are queued based on their priority and are then introduced into the slots in order of priority. As in the document of Shad et al., the criterion adopted leads to the maximisation of the minimum SINR.

Even if the method of Yin and Liu eliminates some drawbacks of the proposal of Shad et al., the issue of the power constraints is still not considered. Moreover, since also the method of Yin and Liu aims at defining a frame structure, the constraints imposed by the physical layer still exist.

The invention aims at proposing a method and an apparatus that: optimises power allocation and transmission rates while meeting power constraints existing in practical systems; does not require the knowledge of the choices made at the MAC and PHY layers; and does not entail a severe computational burden.

Summary of the invention

The invention provides a method in which, for each user candidate for selection, a priority index and a cost function of the spatial separation depending on the priority index are computed. According to the method, communications with the active users are allotted a plurality of modulation and coding schemes, each providing for a respective data rate and a respective power threshold for attaining a predetermined performance level; and the method includes the steps of: assigning a modulation and coding scheme entailing a minimum data rate and power level to all candidate users; calculating the cost function for passing each user to a next higher modulation and coding scheme with a next higher rate, said cost function being a direct function of the power needed to pass a communication with a user to a modulation and coding scheme with a higher data rate and an inverse function of the user priority and the data rate increase; promoting users with the lowest cost functions to the respective higher modulation and coding scheme while respecting a constraint on a maximum transmit power within a coverage area of the base station; and iterating the calculating and promoting steps until all candidate users have been allotted the highest modulation and coding scheme or until no user can be promoted to a higher modulation and coding scheme while respecting said power constraints.

An apparatus for performing the method comprises means, operating at a physical layer of a communication protocol, making available to each user a plurality of modulation and coding schemes, each providing for a respective data rate and a respective power threshold for attaining a predetermined performance level; and processing means, connected between said means operating at the physical layer and means operating at the MAC layer, arranged to select said spatially separable users and the corresponding data rates through an iteration cycle comprising: assigning a modulation and coding scheme entailing a null data rate and a null power level to all candidate users; calculating a cost function for passing each user to a next higher modulation and coding scheme with a next higher rate, said cost function being a direct function of the power needed for the passage and an inverse function of the user priority and the data rate increase, promoting users with the lowest cost functions to the respective higher modulation and coding scheme while respecting a constraint on a maximum transmit power within a coverage area of the base station; and iterating the calculating and promoting steps until all candidate users have been allotted the highest modulation and coding scheme or until no user can be promoted to a higher modulation and coding scheme while respecting said power constraints.

The invention further concerns a wireless network comprising base stations using multiple antennas for transmission/reception of data, and a plurality of user terminals spread in the access range of each base station, wherein the base station is able to perform beamforming while communicating with a user terminal and to use Spatial Division Multiple Access, where multiple users are assigned different beamforming vectors and are allowed to transmit/receive data contemporarily over the same radio resources, and wherein the selection of the users allowed to transmit/receive data contemporarily over the same radio resources is performed at a base station by a method and an apparatus as defined above.

Brief description of the drawings

The invention will become more apparent from the following description of a preferred embodiment, with reference to the accompanying drawings, in which:

- Fig. 1 is a schematic diagram of the scenario of the application of the invention;
- Fig. 2 is a diagram of the lower ISO/OSI layer organisation for implementing the method according to the invention;
- Fig. 3 is a flow chart of the method of the invention;
- Fig. 4 is detailed flow chart of the step of determining the multi-user solutions in the flow chart of Fig.2;
- Fig. 5 is detailed flow chart of the calculation of the cost function in the flow chart of Fig.3.

Detailed description of the preferred embodiment

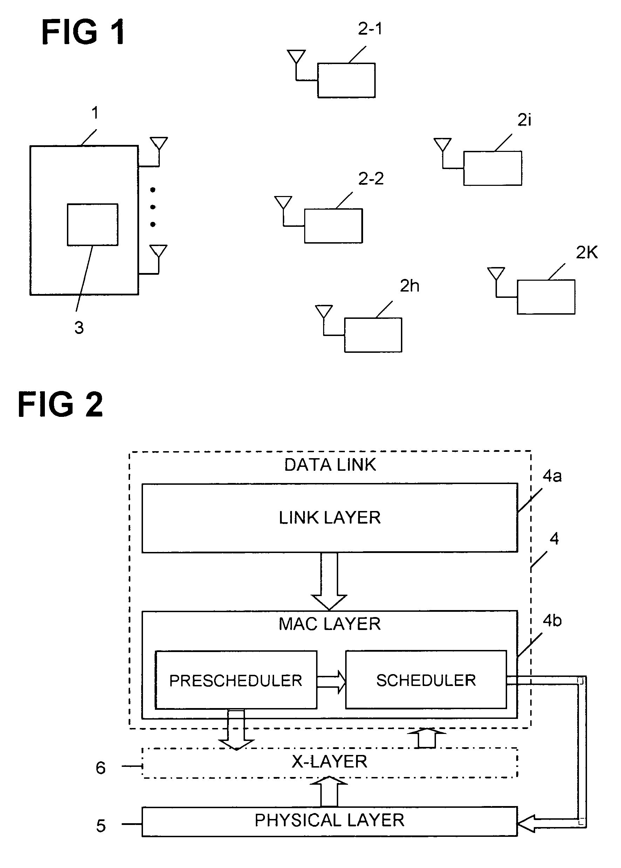

Fig. 1 shows in highly schematic manner a cell of a wireless cellular communication network in which the invention is adopted, for instance a wireless local or metropolitan area network or the like.

A base station 1, equipped with multiple antennas (e.g. an 8-element antenna array), communicates simultaneously with several active users or terminal stations 2-a, 2-b ... 2-h ... 2-i ... 2-K each equipped with a single antenna element. The network is assumed to be based on a point-to-multi-point architecture, that is communication takes place between base station 1 and users 2 and vice versa, and users 2 cannot directly communicate with one another.

The system provides for a space division multiple access (SDMA) of active users 2 in addition to other multiple access techniques, so that several users can share a same channel (in the most general case, a same code in a same time slot on a same frequency). The kind of channels actually adopted in the system is not of interest for the invention, which is just concerned with spatial multiplexing.

The selection of the active users that can be spatially separated, as well as the determination of the respective power allocations and transmissions rates, are performed in a base station controller, schematically shown by block 3. In other words, all the intelligence is located at the multi-antenna base station 1, whereas user terminals 2 are substantially dummy terminals.

To allow for spatial separation of users 2, base station 1 has transmit beamforming capability and to this end it is assumed to obtain complete CSI about each link with all connected users. The invention is independent of the beamforming technique used.

Further, it is assumed that the system supports adaptive coding and modulation, that is communication with each user can take place by using different modulation and coding schemes (MCS). In particular it is assumed that a number of distinct MCSs are supported by the system, each one corresponding to a different transmission rate. Each MCS (and hence each rate) is identified by a minimum Signal-to-Noise Ratio (SNR) or SINR threshold that guarantees that the corresponding modulation and coding scheme provides acceptable performance in terms of BER (bit error rate). These thresholds are related with receiver performance and can be evaluated in real time by gathering physical layer information about the radio channel, or they can be derived from link level measures or simulations.

Thus, denoting by $MCS_n$ ($n = 0...N$) the generic modulation and coding scheme, by $r_n$ the transmission rate associated with $MCS_n$ and by $\gamma_n$ the SINR threshold associated with rate $r_n$, the above assumption for the physical layer can be summarised as follows:

| SINR threshold (dB) | Rate |
|---|---|
| $\gamma_0$ ($= -\infty$) | $r_0$ ($= 0$) |
| $\gamma_1$ | $r_1$ |
| $\gamma_2$ | $r_2$ |
| ... | ... |
| $\gamma_N$ | $r_N$ |

The invention aims at finding one or more subsets of active users that are compatible for simultaneous communication over a same channel, while jointly optimising the corresponding power and rate allocations. The optimisation takes into account users' priorities determined on the base of a metric based on DLC layer information. The information on the user identities and on the powers and rates are then passed to the actual scheduler in controller 3, which exploits such information based on its internal rules and decides whether or not adopting spatial separation.

A greedy method is proposed to solve the above technical problem.

The objective of the method consists in the maximisation of the sum of the rates of users that can be spatially multiplexed, each rate being weighted with a user priority indicator determined through a DLC layer metric based on "traffic information", such as QoS requirements (e.g. delay constraints or throughput commitments), fairness, etc. As it will clearly result from the following description, the method is independent of the particular DLC metric adopted.

The objective above is expressed by:

$$\max_{r_n \in R} \sum_{i=1}^{K} \alpha_i r_n(i) \qquad (1)$$

constrained to

$$\sum_{i=1}^{K} p_i \leq P_T \qquad (2)$$

where

- $\alpha_i$ is a positive or null number that indicates the priority index for the i-th user, which is determined in a manner that will be described below. Index $\alpha_1$ is intended as a general increasing function of user priority;
- K indicates the number of connected (active) users;
- $r_n(i)$ indicates the rate, among the set R supported by the system, assigned by base station 1 to the i-th user according to the current channel and mutual-interference conditions.
- $p_i$ indicates the power allotted to the i-th user;
- $P_T$ indicates the maximum allowed transmit power within the cell.

In order to implement the method of the invention, a new cross layer architecture approach has been adopted in controller 3, as shown in Fig. 2. The Figure shows the two bottom layers of the conventional OSI model, namely data link control (DLC) layer 4 (subdivided into link layer 4a and MAC layer 4b) and physical layer (PHY) 5. According to the invention, a new interface 6, hereinafter referred to as X-Layer, has been introduced between PHY and MAC layers 5 and 4b, and a pre-scheduler 7 has been defined within MAC layer 4b in addition to the usual scheduler 8. X-Layer 6 performs the method by exchanging information with both PHY and MAC layers 4a, 5. More particularly X- layer 6 receives priority indexes $\alpha_i$ from pre-scheduler 7 and beamforming vectors and MCS information from physical layer 5. It determines the user identities and the corresponding rates and passes them to MAC layer 4b, for instance to the scheduler 8, which then takes the proper decisions.

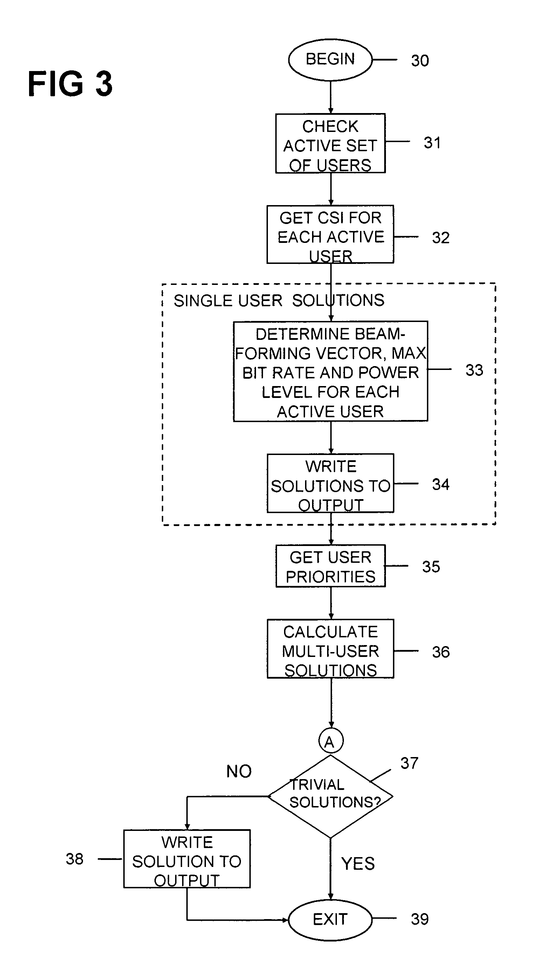

Reference is now made to the flow charts in Figs. 3 to 5.

As shown in Fig. 3, after the starting step 30 and the determination of the active users (step 31), the channel state information (CSI) is got for each active user (step 32). Then the single-user solutions are determined. "Single user solution" indicates that no spatial multiplexing is considered. As indicated at step 34, this entails determining:

- the beamforming vector, by exploiting the CSI;
- the maximum bit rate attainable;
- the corresponding power level.

The solutions determined are written into an output table (step 34) including the following fields:

- Solution Identifier
- User Identifier (SS ID)
- Modulation and coding scheme (MCS) for single user transmission.

Hereinafter an example of output table is shown, where the references symbols employed in Fig. 1 are used as SS ID:

| Solution Identifier | SS ID | MCS |
|---|---|---|
| 1 | 2-1 | $MCS_{n1}$ |
| 2 | 2-2 | $MCS_{n2}$ |
| ... | ... | ... |
| h | 2-h | $MCS_{nh}$ |
| ... | ... | ... |
| K | 2-K | $MCS_{nK}$ |

$MCS_{ni}$ indicate the generic MCS for user i.

Note that even if the solution identifiers have been denoted by the same reference numeral as the users, some users could be not reachable, in which case the corresponding identifier would be lacking in the first column of the table..

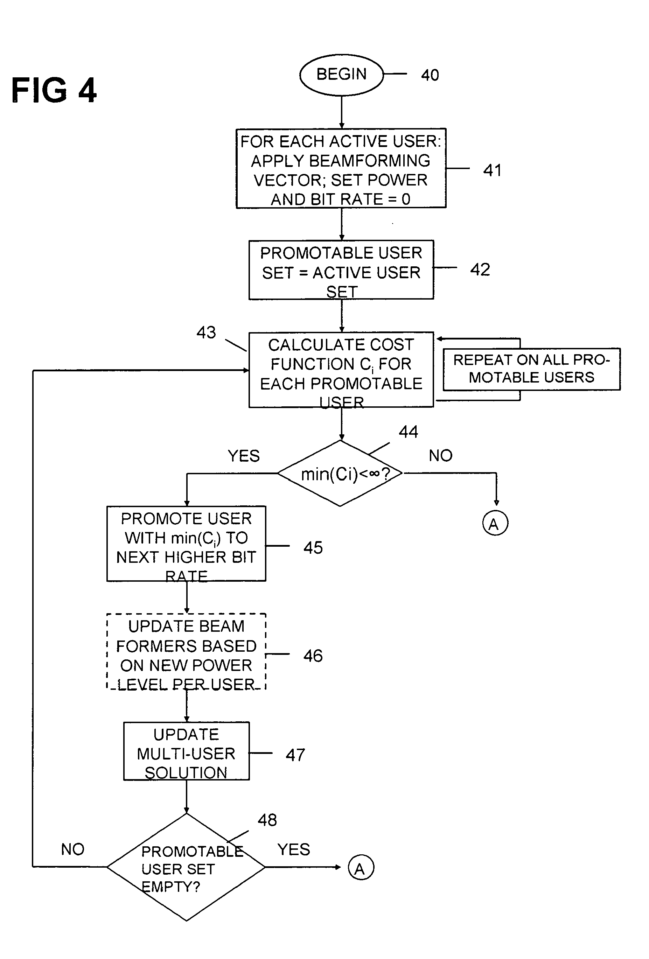

After the single-user solutions have been determined, user priorities $\alpha_i$ are obtained at step 35 and multi-user solutions are searched for at step 36. The multi-user calculation step is the core of the method of the invention and will be discussed in more details with reference to Fig. 4.

At the end of step 36, a check is made (step 37) on whether the solutions found are trivial. "Trivial" means for instance that step 36 resulted again only in single-user solutions. If the multi-user solutions are not trivial, they are written into the output table (step 38) and the operations end (step 39); if the solutions are trivial, the process immediately ends.

Turning now to Fig. 4, the first operation after start 40 is the assignment to all connected users of a null rate $r_0$ by setting the individual target SINR threshold to 0 (or to $-\infty$, if the value is in dB) (step 41). Furthermore, the single user beamforming solution found at step 33 (Fig. 2) is allotted to each of the active users. Then, the set of users towards which it is more advantageous to transmit as they are spatially compatible for a spatial multiplexing scheme is evaluated through a cyclic procedure. All active users are initially considered as promotable or candidate users (step 42).

During each iteration of that cycle, at step 43 the method calculates a cost function $C_i$ for each user, defined as:

$$C_i = \frac{\Delta p_i}{\alpha_i \Delta r(i)} \qquad (3)$$

where:

- $\Delta r(i) = r_{n+1}(i) - r_n(i)$ indicates the gain in terms of rate that can be achieved for the i-th user when passing from rate $r_n(i)$ associated with modulation and coding scheme $MCS_n$ to rate $r_{n+1}(i)$ associated with $MCS_{n+1}$;
- $\Delta p_i$ indicates the cost in terms of power needed to promote the i-th user from the current rate $r_n(i)$ to the next one $r_{n+1}(i)$.

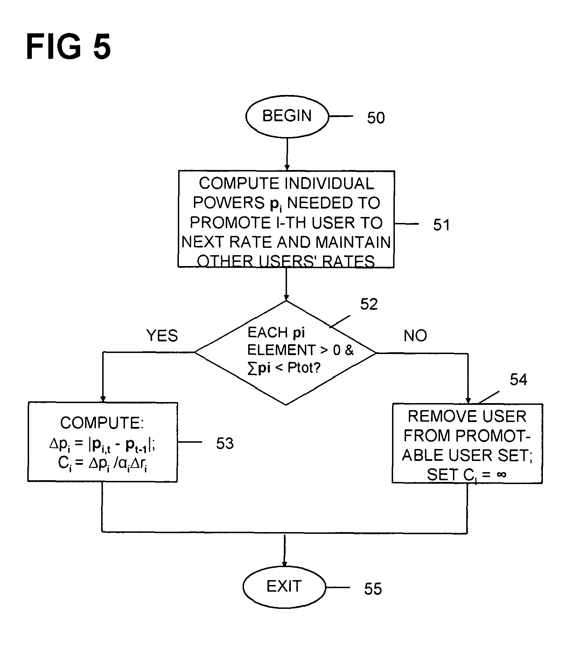

The calculation of $C_i$ will be discussed in more detail with reference to Fig. 5.

Once the cost functions for all users have been determined, the minimum cost $C_i$ is selected and it is checked (step 44) whether such minimum cost is not infinite (that is, the passage to a upper rate is feasible). In the affirmative, the user with minimum $C_i$ is promoted to the higher MCS (step 45) and the relevant information is temporarily stored within X-layer 6 (update the multi-user solution, step 46).

Optionally, after having promoted the user with minimum $C_i$, the beamforming configuration is updated (step 47) in order to adapt the system to the changed interference situation due to the modified power assigned to the user or to other interfering users.

The cycle ends when all users have reached the maximum rate or when no further user can be promoted while respecting the power constraints (output YES of step 48). If a multi-user solution has been actually found, a corresponding identifier, the users involved and the MCSs for such users are written into the output table, as said before in connection with steps 37, 38 in Fig. 3. For instance, assuming that a multi-user solution has been found for users 2-2, 2h, 2j, the output table will be as follows:

| Solution Identifier | SS ID | MCS |
|---|---|---|
| 1 | 2-1 | $MCS_{n1}$ |
| 2 | 2-2 | $MCS_{n2}$ |
| ... | ... | ... |
| h | 2-h | $MCS_{nh}$ |
| ... | ... | ... |
| K | 2-K | $MCS_{nK}$ |
| j | 2-2 | $MCS_{x2}$ |
| j | 2-h | $MCS_{xh}$ |
| j | 2-j | $MCS_{xj}$ |

Of course, the solution is not unique as the optimisation problem is non-linear and thus more than one solution for multi-user combination and rate can be found.

As a realistic example, let us consider the application of the method to a set of six active users in a cell of a network compliant with IEEE Standard 802.16-2004, where the MCSs available, their corresponding data rates and SINR thresholds assumed at BER = $10^{-6}$ are as reported in the following table:

| Modulation & Coding Scheme | Data Rate (Mbps) | SINR Threshold (dB) |
|---|---|---|
| BPSK ½ | 2,7 | 3,2 |
| QPSK ½ | 6,7 | 7,2 |
| QPSK ¾ | 10,0 | 9,9 |
| 16-QAM ½ | 13,3 | 12,6 |
| 16-QAM ¾ | 20,0 | 16,0 |
| 64-QAM $^2/_3$ | 26,7 | 19,8 |
| 64-QAM ¾ | 30,0 | 21,6 |

The resulting output table could be as follows:

| Solution Identifier | SS ID | MCS |
|---|---|---|
| 1 | 1 | BPSK ½ |
| 2 | 2 | 16QAM ¾ |
| 3 | 3 | QPSK ½ |
| 4 | 6 | 64QAM ¾ |
|  | 5 | 0 (Not reachable) |
| 5 | 2 | BPSK ½ |
| 5 | 3 | QPSK ½ |

Note that, even if the discussion of Fig. 4 has assumed that all users are considered while searching for the multi-user solutions, the candidate users could be only a subset of the active users, e.g. users whose spatial relationships allow an easier spatial separation of users, calculated basing on a metric of spatial compatibility. This is readily feasible where the spatial characteristics of the users are relatively stable. More particularly, given a set of N active users, a multi-user solution may be calculated over the whole set at once. Alternatively, the N users can be distributed in a certain number of subsets (it is possible that one user belongs to several of these subsets) such that users in a subset are spatially compatible at each given instant or in the average. A distinct multi-user solution can be calculated for each subset thus obtaining a sensible reduction of the computational effort.

Turning now to Fig. 5, in order to determine $C_i$, the method is to calculate power cost $\Delta p_i$ required to grant the i-th user a higher SINR (i. e. to overcome threshold $y_n$ required for a higher MCS), and to prevent the other users' SINR from becoming worse. Some combinations of SINR cannot be attainable, even with unlimited power available for transmission, so that cost $\Delta p_i$ is not upper bound.

The evaluation of $\Delta p_i$ for each user is based on the evaluation of the required power for reaching a target SINR threshold that allows operation at a certain data rate. In general, given a vector $\boldsymbol{y} = [y(1)...y(K)]$ of the individual target SINR levels for each user and the last beamforming configuration obtained from the previous iteration, the vector of individual users' power levels is calculated by solving the following system of equations

$$(I - D\Phi)p = \sigma \qquad (4)$$

where:

- **I** is the identity matrix;
- **D** is a diagonal K x K matrix whose elements are defined as:

  - $[D]_{i,i} = y_i/g_i$, $y_i$ being the target SINR for user i, and $g_i$ being the gain of the corresponding channel after beamforming;
  - $[D]_{i,j} = 0$ for $j \neq i$

- $\Phi$ is the interference matrix whose elements are defined as:

  - $[\Phi]_{i,j}$, $j \neq i$, indicates the power gain of the beamforming vector chosen for user j towards user i, or, equivalently, the amount of interference that will be injected by the data stream of user j into the stream of user i;
  - $[\Phi]_{i,i}=0$

- $\sigma = [\sigma_1,...,\sigma_K]^T$ is a vector containing the power of the receiver noise and intercell interference at the current iteration (i.e. the iteration concerning the i-th user);
- $\boldsymbol{p} = [p_1,...,p_K]^T$ is the vector of power levels.

Step 51 is just the determination of **p**. In order a user can actually be promoted, all elements of **p** must be positive (that is the solution must be physically feasible) and constraint (2) on the overall power must be respected. If both conditions are met (output YES of step 52), $\Delta p_i$ is then determined (step 53) and $C_i$ is actually calculated according to (1) (step 53). $\Delta p_i$ is determined by evaluating the variation in **p** resulting from the variation of the $D_{i,i}$ element due to the promotion the i-th user from rate $r_n(i)$ to the next one $r_{n+1}(i)$, that is

$$\Delta p_i = |\mathbf{p}_{i,t} - \mathbf{p}_{t-1}| \qquad (5)$$

where $\mathbf{p}_{i,t}$ is the vector of power levels resulting from the allocation of a new power to the i-th user at the current iteration, and $\mathbf{p}_{t-1}$ is the vector of power levels at the end of the previous iteration.

If the check of step 52 has a negative outcome, the corresponding user is deleted from the set of promotable users and $C_i$ is set to $\infty$ (step 54).

Turning back to Fig. 2, the method disclosed above is performed by X-layer 6. X-layer 6 receives priority indexes $\alpha_i$ from pre-scheduler 7 and interference matrix $\Phi$ and user channel gains $g_i$ from physical layer 5, and feeds back the results (the output table) to MAC layer 4b for the actual scheduling. More particularly, the scheduling algorithm chooses the beamforming solution available by considering the user priority classification provided by the pre-scheduler. For each user, multi-user solutions are preferred if the overall data rate (determined as the sum of rates that are foreseen for spatially multiplexed users) is higher than the rate provided by the single user solution. Finally, the choices taken by the scheduler are communicated to the PHY layer in order to define the frame and to create control messages.

Note that in the simplest case the output table is fed from X-layer 6 directly to scheduler 8. In the alternative, if some further processing is required before scheduling, for instance a reordering of the priorities, as a consequence of the solutions that have been found, the table can be fed to the pre-scheduler.

Pre-scheduler 7 calculates the DLC layer metric and obtains priority indexes $\alpha_i$ based on such metric. More particularly, according to the invention, the DLC metric is expressed by quantity AST (Active Session Throughput), defined as the number of bits transmitted by the i-th user during a fixed time window ($t_w$). AST is determined by considering the time intervals ($T_i^{ON}$), within a predefined time window $t_w$, during which each user has been active (i.e. the queue was non empty):

$$AST_i = \frac{\sum bit_{tx}}{\sum T_i^{ON}}, \forall T_i^{ON} \in t_w \qquad (5)$$

This value represents the amount of service obtained by the i-th user during a particular time gap. In order to evaluate priority index $\alpha_i$ of each user, AST is compared with a minimum guaranteed service threshold (min $gar_i$). The resulting priority index is thus related with a long-term fairness between active users. More specifically, the priority index is calculated as:

$$\alpha_i = \min\left(Q_i, \frac{\min\ gar_i}{AST_i}\right) \qquad (6)$$

where $Q_i$ is a constant representing the maximum allowed value for $\alpha_1$.

The PHY layer acquires the CSI through base station measurements over reciprocal channels or through feedback messages from the receiver over non-reciprocal ones.

We assume for simplicity that the channels are frequency flat, and thus the i-th user's channel can be described by a vector $h_i$, where each element indicates the complex gain between one of the transmitting antennas and the i-th user's receiving antenna. If the channels are not frequency flat, as in OFDM (Orthogonal Frequency Division Multiplexing) systems, the assumption remains valid when considering each subcarrier.

The collected CSI can be in the form of either:

- estimates $\underline{h}_i$ of the channel vectors, or other kinds of instantaneous channel information;
- estimates $\bar{R}_i$ of the channel covariance, or other kinds of long-term (statistical) channel information.

In the first case, the CSI requires frequent updates, depending on the channel decorrelation times, but it allows forecasting exactly (within measurement errors) the interference levels at the receivers for a given SDMA schedule.

In the second case, the interference can be described only in statistical terms, and, in particular, the average (over the channel distribution) SINR can be calculated for each user in an SDMA schedule. On the other side, covariance information need less frequent updates.

The CSI could also be the instantaneous or the average gain of some or all vectors in a set of predefined beamforming vectors available at base station 1.

By exploiting the CSI acquired for each user, PHY layer 5 elaborates the single user beamforming solutions for each connected user, which solutions respectively correspond to the dominant eigenvector of the user's signal subspace. The beamforming vector for a user could be determined as the vector that would be would be optimal was the user alone in the cell, or could be chosen out of the set of predefined vectors. Then, it prepares matrix $\Phi$ describing the inter-user interference, and the user channel gains $g_i$ after beamforming. The beamforming matrix is then made available to the X-Layer in order to operate the optimisation procedure described above. The beamforming matrix can possibly be updated at the end of the X-layer processing considering the output power levels per user that have been determined.

The proposed method is thus able to determine both:

- a convenient set of users to be scheduled according to inner scheduler rules, expressed through the user priorities calculated on the basis of a DLC metric;
- the corresponding transmission rates, spatial precoding vectors and individual transmit power, which result feasible considering the actual channel state and interference situation.

Notice that the method, and hence X-layer 6, needs not know the DLC metric and it only has to take into account the priorities, independently of how these are determined. Likewise, X-layer 6 needs not to have any information about the kind of CSI and the manner in which CSI is exploited for beamforming, nor about how the actual transmission is then organised at the physical layer level. Also, the decisions on the actual allotting of resources are left to scheduler 8.

Thus, the structure of physical and MAC layers 5, 4b, can be kept substantially unchanged, and such layers only need to exchange certain information with X-Layer 6. Such independence of X-layer 6 from the adjoining standard layers provides for a high flexibility of the method disclosed.

It is clear that the above description has been given only by way of non-limiting example and that changes and modifications are possible without departing from the scope of the invention, as defined in the appended claims.

**Claims**

1. A method of selecting, at a base station of an SDMA wireless communication system, spatially separable active users (2-1....2-K) and corresponding data rates, wherein beamforming is performed for transmissions towards each user and wherein the method includes computing, for each user (2-1....2-K) candidate for selection, a priority index and a cost function of the spatial separation depending on the priority index, and selecting users (2-1....2K) that exhibit the lowest cost functions,
   **characterised in that**, for implementing SDMA in a system where communications with said users (2-1....2K) are allotted a plurality of modulation and coding schemes, each providing for a respective data rate and a respective power threshold for attaining a predetermined performance level, the method further includes the following steps:

   - assigning a beamforming vector to each candidate user (2-1...2-K)
   - assigning an initial minimum modulation and coding scheme entailing a feasible minimum data rate and power level to all candidate users (2-1...2-K);
   - calculating the cost function for passing each user (2-1...2-K) to a next higher modulation and coding scheme with a next higher rate, said cost function being a direct function of the power needed for such a passage and an inverse function of the user priority and the data rate increase;
   - promoting users with the lowest cost functions to the respective higher modulation and coding scheme while respecting a constraint on a maximum transmit power within a coverage area of the base station; and
   - iterating the calculating and promoting steps until all candidate users have been allotted the highest modulation and coding scheme or until no user can be promoted to a higher modulation and coding scheme while respecting said power constraints.

2. The method as claimed in claim 1, **characterised in that** said initial minimum data rate and power level are a null data rate and a null power level.

3. The method as claimed in claim 1 or 2, **characterised in that** said candidate users comprise all active users (2-1 ... 2-K).

4.  The method as claimed in claim 1 or 2, **characterised in that** said candidate users comprise at least one subset of the active users (2-1 ... 2-K), selected based on spatial relationships.

5.  The method as claimed in claim 4, **characterised in that** said candidate users are distributed in a number of subsets such that users in a subset are spatially compatible at each given instant or in the average.

6.  The method as claimed in claim 5, **characterised in that** spatially separable users are selected separately for each subset.

7.  The method as claimed in any of claims 1 to 6, **characterised in that** information about the users having been promoted are passed to a scheduling function (8) at the MAC layer level (4b).

8.  The method as claimed in any of claims 1 to 6, **characterised in that** information about the users having been promoted are passed to a pre-scheduling function (7) provided at the MAC layer level (4b) and in charge of computing the user priorities, said pre-scheduling function processing the received information and feeding the processed information to said scheduling function.

9.  The method as claimed in any of claims 2 to 8, **characterised in that** each candidate user is initially assigned a beamforming vector that would be optimal should the user be alone in the cell.

10. The method as claimed in any preceding claim, **characterised in that** it includes updating the beamforming vector of a user (2-1...2-K) after the promotion of that user to a higher modulation and coding scheme, to take into account the new power level allotted to that user or to other interfering users.

11. The method as claimed in any preceding claim, **characterised in that** said step of calculating the cost function includes:

    - calculating, for all candidate users, the individual power levels required to promote a candidate user being considered at the current iteration step to the modulation and coding scheme with the next higher rate and to maintain the other users' rates;
    - checking that said individual power levels are positive and their sum respects the total power constraints;
    - calculating, in the affirmative, the difference between the individual power levels at the current iteration and the power levels at the previous iteration,

12. The method as claimed in claim 6, **characterised in that** said individual power levels are calculated by solving the following system of equations:

$$(\mathbf{I} - \mathbf{D}\Phi)\mathbf{p} = \sigma$$

where:

    - $\mathbf{I}$ is the identity matrix
    - $\mathbf{D}$ is a matrix having as many rows and columns as the candidate users are and whose elements are defined as:

        - $[D]_{i,i} = y_i/g_i$, $y_i$ being the target SINR for user i, and $g_i$ being the gain of his/her channel after beamforming;
        - $[D]_{i,j} = 0$ for $j \neq i$

    - $\Phi$ is the interference matrix whose elements are defined as:

        - $[\Phi]_{i,j}$, for $j \neq i$, is the amount of interference that will be injected by a data stream of user j into the data stream of user i, using the currently assigned beamforming vectors;
        - $[\Phi]_{i,i} = 0$

    - $\sigma = [\sigma_1,...,\sigma_K]^T$ is the vector that contains the power of the receiver noise and intercell interference at the current iteration (time T);
    - $\mathbf{p} = [p_1,...,p_K]^T$ is the vector to be calculated.

**13.** The method as claimed in any preceding claim, wherein said priority index is computed by the following steps:

- computing an active session throughput, defined as the number of bits transmitted by the concerned user during a fixed time window, said throughput being determined by considering the time intervals, within said time window, during which each user has been transmitting;
- comparing said active session throughput with a minimum guaranteed service threshold;
- choosing said minimum guaranteed service threshold as said priority index, provided it is lower than a maximum allowed value for the priority.

**14.** An apparatus for determining spatially separable active users and corresponding data rates in a controller (3) of a base station (1) of an SDMA wireless communication system, the apparatus including:

- means (5), operating at a physical layer of a communication protocol, for acquiring information on the state of the channel and determining a beamforming vector for each candidate user (2-1....2K);
- means (4b, 7, 8) operating at a medium access control (MAC) layer of the communication protocol, for determining a priority index for each candidate user and for scheduling resource allotment to the users;

**characterised in that** said means (5) operating at the physical layer make available for communication with each user a plurality of modulation and coding schemes, each providing for a respective data rate and a respective power threshold for attaining a predetermined performance level; and **in that** the apparatus further comprises processing means (6), connected between said means (5) operating at the physical layer and said means (4b, 7, 8) operating at the MAC layer, arranged to select said spatially separable users and the corresponding data rates through an iteration cycle comprising:

- assigning an initial beamforming vector to each candidate user;
- assigning a modulation and coding scheme entailing a null data rate and a null power level to all candidate users;
- calculating a cost function for passing each user to a next higher modulation and coding scheme with a next higher rate, said cost function being a direct function of the power needed for such a passage and an inverse function of the user priority and the data rate increase,
- promoting users with the lowest cost functions to the respective higher modulation and coding scheme while respecting a constraint on a maximum transmit power within a coverage area of the base station; and
- iterating the calculating and promoting steps until all candidate users have been allotted the highest modulation and coding scheme or until no further user can be promoted to a higher modulation and coding scheme while respecting said power constraints;

**15.** The apparatus as claimed in claim 14, **characterised in that** said processing means (6) are arranged to:

- receive the user priorities from a pre-scheduler (7) belonging to said means (4b, 7, 8) operating at the MAC layer and determining the user priorities based on a Data Link Control layer metric;
- receive beamforming vectors and information on the available modulation and coding schemes from said means (5) operating at the physical layer; and
- at the end of the iterations, provide said means (4b, 7, 8) operating at the MAC layer, with the information about the users having been promoted and the respective rates.

**16.** The apparatus as claimed in claim 14 or 15, **characterised in that** said processing means (6) are arranged to pass the information about the users having been promoted and the respective rates directly to the scheduler (8).

**17.** The apparatus as claimed in claim 14 or 15, **characterised in that** said processing means (6) are arranged to pass the information about the users having been promoted and the respective rates to the pre-scheduler (7) for further processing based on the selection results, the pre-scheduler (7) passing the processed information to the scheduler (8).

# FIG 1

2-1

2i

1

2-2

3

2K

2h

# FIG 2

DATA LINK

4a

LINK LAYER

4

MAC LAYER

4b

PRESCHEDULER → SCHEDULER

6 — X-LAYER

5 — PHYSICAL LAYER

**FIG 3**

BEGIN — 30

CHECK ACTIVE SET OF USERS — 31

GET CSI FOR EACH ACTIVE USER — 32

SINGLE USER SOLUTIONS

DETERMINE BEAM-FORMING VECTOR, MAX BIT RATE AND POWER LEVEL FOR EACH ACTIVE USER — 33

WRITE SOLUTIONS TO OUTPUT — 34

GET USER PRIORITIES — 35

CALCULATE MULTI-USER SOLUTIONS — 36

A

NO

TRIVIAL SOLUTIONS? — 37

38 — WRITE SOLUTION TO OUTPUT

YES

EXIT — 39

# FIG 4

BEGIN — 40

FOR EACH ACTIVE USER: APPLY BEAMFORMING VECTOR; SET POWER AND BIT RATE = 0 — 41

PROMOTABLE USER SET = ACTIVE USER SET — 42

43 — CALCULATE COST FUNCTION $C_i$ FOR EACH PROMOTABLE USER

REPEAT ON ALL PRO-MOTABLE USERS

44

$\min(C_i) < \infty$?

YES

NO

A

PROMOTE USER WITH $\min(C_i)$ TO NEXT HIGHER BIT RATE — 45

UPDATE BEAM FORMERS BASED ON NEW POWER LEVEL PER USER — 46

UPDATE MULTI-USER SOLUTION — 47

48

PROMOTABLE USER SET EMPTY?

NO

YES

A

# FIG 5

BEGIN — 50

COMPUTE INDIVIDUAL
POWERS $p_i$ NEEDED TO
PROMOTE I-TH USER TO — 51
NEXT RATE AND MAINTAIN
OTHER USERS' RATES

52

EACH pi
ELEMENT > 0 &
$\sum pi$ < Ptot?

YES

NO

54

COMPUTE:
$\Delta p_i = |p_{i,t} - p_{t-1}|$; — 53
$C_i = \Delta p_i /a_i \Delta r_i$

REMOVE USER
FROM PROMOT-
ABLE USER SET;
SET $C_i = \infty$

EXIT — 55

European Patent
Office

**EUROPEAN SEARCH REPORT**

Application Number

EP 05 42 5851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 02/093819 A (QUALCOMM INCORPORATED) 21 November 2002 (2002-11-21) * paragraph [1001] * * paragraph [1009] - paragraph [1012] * * paragraph [1023] * * paragraph [1032] * * paragraph [1037] - paragraph [1038] * * paragraph [1041] * * paragraph [1070] * * paragraph [1074] * * paragraph [1105] * * paragraph [1154] - paragraph [1159] * ----- | 1-17 | H04Q7/38 |
| A,D | DIEGO BARTOLOME CALVO: "Fairness Analysis of Wireless Beamforming Schedulers" PH.D. DISSERTATION, 10 November 2004 (2004-11-10), pages 1-140, XP002373146 * page 4, line 10 - page 5, line 21 * * page 30, line 19 - page 33, line 26 * * page 61, line 1 - page 62, line 20 * ----- | 1-17 | |
| | | | TECHNICAL FIELDS SEARCHED (IPC) |
| | | | H04Q |

The present search report has been drawn up for all claims

| Place of search | Date of completion of the search | Examiner |
|---|---|---|
| The Hague | 21 March 2006 | Heinrich, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                  
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 42 5851

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2006

| Patent document cited in search report | Publication date | Patent family member(s) | | Publication date |
|---|---|---|---|---|
| WO 02093819 A | 21-11-2002 | BR | 0209636 A | 31-08-2004 |
| | | CA | 2446877 A1 | 21-11-2002 |
| | | CN | 1522512 A | 18-08-2004 |
| | | EP | 1388231 A1 | 11-02-2004 |
| | | JP | 2004535106 T | 18-11-2004 |
| | | MX | PA03010414 A | 02-04-2004 |
| | | TW | 545074 B | 01-08-2003 |
| | | US | 2003087673 A1 | 08-05-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. SHAD et al.** Dynamic Slot Allocation (DSA) in Indoor SDMA/TDMA Using a Smart Antenna Basestation. *IEEE/ACM Transactions on Networking,* February 2001, vol. 9 (1), 69-81

- **H. YIN ; H. LIU.** Performance of Space-Division Multiple-Access (SDMA) with Scheduling. *IEEE Transaction on Wireless Communications,* October 2002, vol. 1 (4), 611-618